Europäisches Patentamt

European Patent Office

Office européen des brevets

(19)

(11) Numéro de publication : **0 278 898 B1**

## (12) FASCICULE DE BREVET EUROPEEN

(45) Date de publication du fascicule du brevet :
24.07.91 Bulletin 91/30

(51) Int. Cl.⁵ : **B23B 3/26, B23Q 5/34, B23Q 1/26**

(21) Numéro de dépôt : **88810024.5**

(22) Date de dépôt : **18.01.88**

---

(54) **Mandrin rotatif pour poste de décolletage.**

---

(30) Priorité : **29.01.87 CH 298/87**

(43) Date de publication de la demande :
**17.08.88 Bulletin 88/33**

(45) Mention de la délivrance du brevet :
**24.07.91 Bulletin 91/30**

(84) Etats contractants désignés :
**BE CH DE FR GB IT LI**

(56) Documents cités :
**CH-A- 330 217**
**CH-A- 481 704**
**DE-A- 1 913 377**
**DE-B- 1 038 375**
**FR-A- 1 474 935**

(56) Documents cités :
**GB-A- 365 088**
**GB-A- 1 126 335**
**MACHINE DESIGN, vol. 32, no. 2, 21 janvier 1960, pages 148-151, Penton, Inc., Cleveland, US; "Tapered sleeve adjusts both tools on wire-turning automatic nervous system for a pantograph"**

(73) Titulaire : **Ventura, Cyrillo**
**CH-2207 Coffrane (CH)**

(72) Inventeur : **Ventura, Cyrillo**
**CH-2207 Coffrane (CH)**

(74) Mandataire : **Dubois, Jean René et al**
**BOVARD SA Ingénieurs-Conseils ACP**
**Optingenstrasse 16**
**CH-3000 Berne 25 (CH)**

---

## Description

La présente invention se rapporte d'une façon générale aux postes de décolletage à outils rotatifs tournant autour de la pièce à usiner. Plus précisément, l'invention concerne un mandrin rotatif conforme au préambule de la revendication indépendante 1 annexée.

Les postes de décolletage du genre en question sont connus, notamment du CH-A-327038 au nom de ESCO SA, Les Geneveys-sur-Coffrane, Suisse. Au lieu de faire tourner la barre de matériau à usiner, comme le font les tours automatiques, les postes du genre en question, à mandrin rotatif portant au moins un burin, ont l'avantage de ne pas faire tourner la barre puisque les outils (burins, ou voire un autre outil comme par exemple une molette) tournent autour de la barre de matériau à usiner rotativement fixe. Sur une telle machine, on peut utiliser du matériau à usiner provenant d'une torche, posée sur un dévidoir, et qu'une machine à rectifier rend rectiligne avant son entrée dans le tasseau du mandrin. Actuellement, on usine de la sorte différents matériaux, notamment du laiton, de l'acier inoxydable, etc, d'un diamètre brut allant jusqu'à l'ordre de 5 mm. Le traitement de barres plus grosses serait envisageable, mais il exigerait des dispositifs redresseurs de barre extrêmement puissants ; de plus, à volume égal, la longueur du matériau dans une torche est inversement proportionnelle au carré de son diamètre. Ces machines à outil rotatif tournant autour de la pièce à usiner sont donc utilisées principalement pour la fabrication de pièces de petites dimensions. Dans ce domaine, elles s'avèrent extrêmement avantageuses puisque, d'une part, elles permettent de fabriquer avec précision des pièces décolletées de très petites dimensions et que, d'autre part, elles n'exigent qu'une surveillance minimale puisque l'alimentation en torches leur assure une très longue autonomie de fonctionnement.

L'appareil principal d'un tel poste de décolletage est le mandrin rotatif et la qualité du mandrin détermine l'intérêt du poste d'usinage.

Les mandrins rotatifs actuellement sur le marché, faisant partie notamment des équipements connus précités, sont prévus pour une vitesse de rotation de l'ordre de 5'000 t/m. Toutefois, la technique moderne demande des vitesses de travail plus rapides. Une augmentation de la vitesse de rotation des mandrins rotatifs du type en question est désirable non seulement pour des raisons de rendement horaire ou journalier, mais également pour des questions purement technologiques. En effet, certains matériaux, comme par exemple l'acier inoxydable, travaillés par des burins en métal dur ou du type céramique, s'usinent mieux à vitesse élevée qu'à vitesse basse. Par exemple, en passant de 6'000 t/m à 12'000 t/m, on a constaté que le burin devait être moins fréquemment réaffuté, malgré une production horaire doublée.

L'art antérieur à considérer comprend un article de la revue MACHINE DESIGN, vol. 32, No 2, du 21 janvier 1960, pages 148-152. Cet article concernant Penton Inc., Cleveland US, est intitulé "Tapered Sleeve Adjusts Both Tools, On Wire-Turning Automatic, Nervous System for a Pantograph". Ce document concerne, comme on peut le voir à sa page 149, le mandrin d'un poste d'usinage fabriqué par "ESCO SA, Les Geneveys-sur-Coffrane, Suisse". L'art antérieur comprend églement le DE-B-1 038 375. On peut voir qu'il est au nom de la même maison suisse et qu'il présente un même poste d'usinage, avec un mandrin identique ou analogue à celui du document premièrement cité.

Il y a lieu d'admettre que ces deux documents correspondent à ce qui est défini dans le préambule de la revendication indépendante annexée.

Malheureusement, aucun de ces documents ne fournit d'indications de vitesse ; toutefois, les praticiens qui ont eu affaire à la machine décrite dans le premier document auront pu constater que cette limite se situait à 5000-6000 t/m. Une forme d'exécution du mandrin selon l'invention a par contre, lors d'essais effectués en l'absence de toute connaissance du public, fonctionné de façon satisfaisante jusqu'à approximativement 12'000 t/m.

Le document FR-A-1 474 935 est également à considérer. Ses figures 1 et 2 paraissent proposer une "inversion cinématique" d'un aspect du mandrin proposé (neutralisation de l'ébat des billes), lequel aspect peut s'adjoindre à d'autres, inédits, pour hausser encore la performance. Toutefois, la différence va au-delà d'une simple inversion cinématique. On note en effet que l'objet de l'exposé FR-A-1 474 935 était un dispositif rotatif du type à broche intérieure tournante et à poupée extérieure fixe, de sorte qu'aucun problème de dégénération ne s'y présentait.

La présente invention vise d'une façon générale à fournir un mandrin rotatif du type en question capable de fonctionner à des vitesses de rotation notablement supérieures à celles que permettent les mandrins selon l'art antérieur.

On relève que des solutions proposées d'une façon générale en mécanique ne peuvent pas être d'emblée et sans problème appliquées au cas de ces mandrins rotatifs. En effet, ces appareils sont soumis à des sollicitations importantes et à des conditions de travail rendues difficiles par une construction forcément en porte-à-faux et par la haute précision d'usinage requise.

Les mandrins actuels sont construits pour fonctionner normalement à 5'000 t/m. On les utilise couramment et sans grand problème à 6'000 t/m. Des essais ont permis de les faire fonctionner jusqu'à approximativement 8'000 t/m, mais cette vitesse-là s'avère être une limite au-delà de laquelle les forces centrifuges qui interviennent provoquent une très rapide détérioration du mandrin. On a également constaté qu'à ces vitesses l'usure des moyens à billes qui servent de paliers devient beaucoup plus rapide. L'usure augmente en fait plus que proportionnellement à la cadence et les mandrins actuels ne sont plus guère fiables à vitesse élevée.

Il est clair que, en fonctionnement, de petits écarts ou de petites imperfections peuvent se manifester, la question est de savoir jusqu'où ils sont admissibles et à quel moment ils vont prendre une ampleur telle que le mandrin deviendra inutilisable, c'est-à-dire qu'il nécessitera une révision complète. On a constaté notamment que les ressorts hélicoïdaux placés en des positions excentriques entre la pièce-mandrin et la pièce-douille pour repousser cette dernière supportaient mal la force centrifuge due aux vitesses élevées. Ce sont ces ressorts qui ont cédé les premiers lors d'une tentative d'entraîner un mandrin actuel à haute vitesse de rotation. Il semble que la déformation, puis la cassure, du ressort procède d'un phénomène dégénératif. A vitesse élevée, la force centrifuge déforme des portions de ressort, principalement celles où le ressort est pratiquement "en l'air", et ces déformations augmentent la force centrifuge en même temps qu'elles provoquent diverses vibrations. Ceci entraîne un accroissement de la déformation, qui entraîne un accroissement de force centrifuge, etc. A partir d'une certaine vitesse de rotation, ces moyens à ressorts de l'art antérieur se cassent d'une façon pratiquement systématique par suite d'une auto-stimulation des déformations qu'ils subissent.

On a également constaté que, à vitesse élevée, les roulements à billes s'usent assez rapidement, d'une façon bien plus que proportionnelle à la vitesse. Une bonne lubrification, par brouillard d'huile, évitant les échauffements, n'empêche malgré tout pas cette usure accélérée à haute vitesse dans les mandrins de l'art antérieur. Il semble qu'il s'agisse là aussi d'un phénomène dégénératif, particulièrement important du fait de la construction en porte-à-faux du mandrin. Lorsqu'une très faible usure des roulements à billes intervient, elle introduit un jeu qui provoque des vibrations que l'inertie du mandrin rend relativement importante. Ces vibrations à leur tour accélèrent le processus d'usure et l'augmentation de l'usure amplifie ces vibrations. Le jeu qui s'introduit dans les roulements n'augmente donc pas linéairement avec le temps mais exponentiellement avec le temps, ce qui fait que, après l'apparition d'un petit jeu d'usure qui pourrait être en soi tolérable, l'usure augmente très vite et le jeu devient rapidement intolérable.

Pour pouvoir faire tourner un mandrin du genre en question à vitesse plus élevée, il faudrait donc prendre des mesures pour limiter les effets de la force centrifuge, ou tout au moins pour empêcher qu'elle augmente trop malgré l'augmentation de vitesse, et/ou pour rendre toute la construction du mandrin mieux capable de résister aux effets de ces forces qui augmentent avec le carré de la vitesse.

Le mandrin rotatif objet de l'invention arrive à fournir ces performances par le fait qu'il présente, en plus des caractères génériques énoncés dans le préambule de la revendication indépendante 1, les caractères spécifiques énoncés dans la partie caractérisante de cette revendication.

Les revendications dépendantes annexées définissent ces différentes possibilités, avantageuses du point de vue des performances obtenues, notamment en ce qui concerne le fonctionnement à vitesse élevée et avec une longue durée de vie (ne nécessitant pas d'entretien intermédiaire), ces revendications dépendantes définissant aussi des particularités constructives qui permettent d'alléger les parties périphériques et de diminuer le diamètre, ce qui est favorable du point de vue de la force centrifuge, des forces d'inertie et des effets de vibration.

La construction du mandrin selon l'invention se doit également de permettre un montage et un démontage aisés, par exemple pour effectuer des revisions périodiques. A la limite, l'utilisateur du mandrin pourrait procéder lui-même à sa révision, ce qui n'est pas possible avec les mandrins actuels dont la révision exige l'appel à un spécialiste.

Le dessin annexé illustre, à titre d'exemple, une forme d'exécution de l'objet de l'invention ; dans ce dessin :

la fig. 1 est une vue en perspective qui montre, dans les grandes lignes, un poste de décolletage à outils rotatifs d'un type en soi connu et dont la partie active comprend un mandrin qui peut avantageusement être du type proposé par l'invention,

la fig. 2 est une vue en coupe axiale, selon la ligne AOBCD de la fig. 3, d'un mandrin rotatif du type proposé par l'invention,

la fig. 3 est une vue en coupe radiale, selon la ligne III-III, IIIa-IIIa de la fig. 2 du mandrin en question, une pièce-poulie, en forme de cape, étant supposée enlevée dans la partie de la fig. 3 coupée par la ligne III-III,

la fig. 4 est une vue depuis l'avant, dans la direction IV-IV de la fig. 2, une partie étant coupée pour représenter un dispositif à vis sans fin, et

la fig. 5 est une vue en perspective éclatée des principales pièces du mandrin en question.

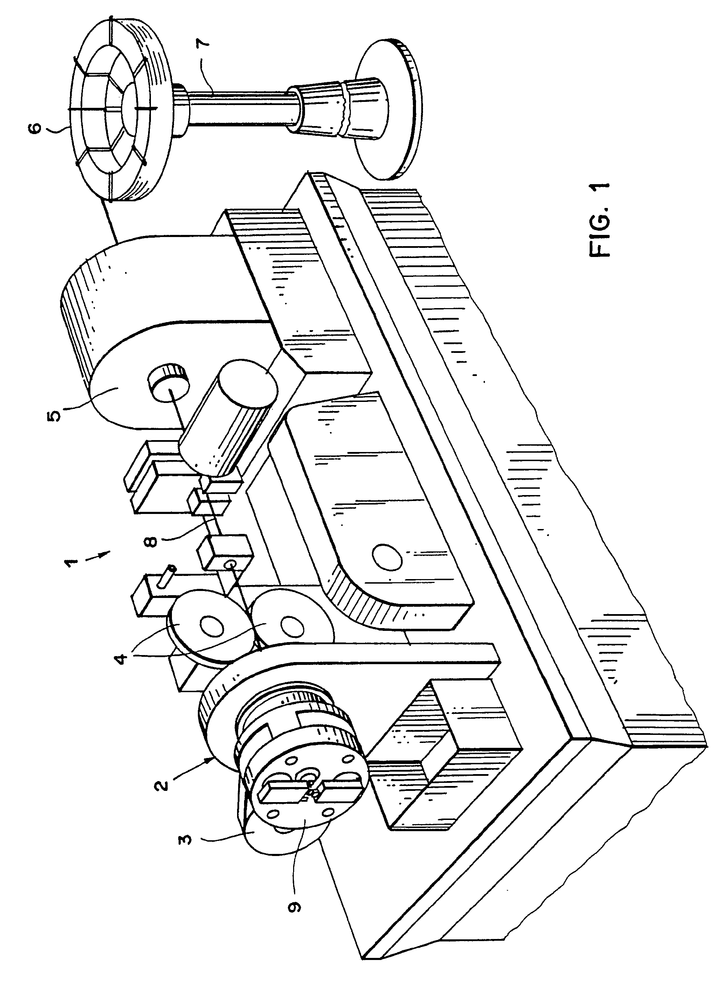

La fig. 1 montre un poste de décolletage à outils rotatifs, poste en lui-même connu mais qui est apte à recevoir un mandrin du genre particulier proposé par l'invention. Le poste de décolletage 1 comprend un redresseur de matériau 5 qui redresse une barre de matériau stockée sous forme d'une torche 6 sur un dévidoir 7. Le redresseur 5 est capable de débiter sans interruption une très grande longueur de fil redressé 8, puisque celui-ci provient d'une torche. Le fil redressé 8 passe entre deux roulettes d'entraînement 4 qui sont pressées l'une contre l'autre et qui sont commandées pour tourner le moment voulu, de façon à faire avancer le matériau à usiner 8. La partie active 2 du poste de décolletage 1 comprend un moteur 3 qui entraîne en rotation, par l'intermédiaire d'une courroie un mandrin 9. C'est un type particulier de mandrin, pouvant prendre la place du mandrin 9, qui est proposé par l'invention et décrit aux figures suivantes 2 à 5.

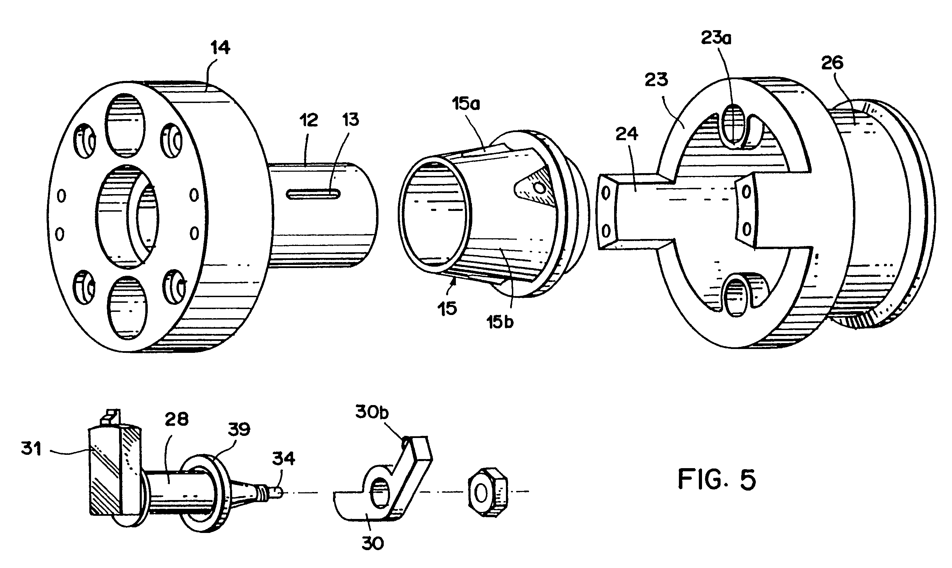

En considérant ces figures, on voit que le mandrin comporte un tasseau 10 dont la partie arrière est filetée de façon à pouvoir être montée dans une plaque de montage 44 du poste de décolletage. A l'intérieur de ce tasseau 10 se trouve ajusté un canon de guidage de barre 36 qui est maintenu dans le tasseau par une vis radiale arrière 45. La barre de matériau à usiner est guidée à l'intérieur du canon 36 jusque vers l'avant du tasseau 10 d'où elle émerge pour être usinée. Le canon 36 guide la barre 8 sans jeu, avec une haute précision. Autour du tasseau 10 tourne une pièce-mandrin 12 qui comprend une partie en forme de manchon 13 et une partie en forme de plateau 14 (voir fig. 5). La pièce-mandrin 12 est montée sur le tasseau 10 par l'intermédiaire d'un roulement à billes préfabriqué avant 19 et d'un roulement à billes préfabriqué arrière 20. On reviendra sur les particularités de ce montage.

Dans deux perçages excentriques, diamétralement opposés, de la pièce-mandrin 12, sont montés des organes porte-burins 27, qui comportent une partie-pivot 28. Cette partie-pivot de l'organe porte-burin est montée de façon extrêmement précise dans la partie-plateau de la pièce-mandrin par l'intermédiaire d'un canon 29. Le canon 29 est tenu sans jeu dans la pièce-mandrin et le pivot 28 est tenu sans jeu dans le canon 29. Sur la face avant de la partie-plateau 14 de la pièce-mandrin, l'organe porte-burin 27 porte un manche de burin 31 qui porte lui-même un burin 32 voisin du centre du tasseau. Du côté arrière de la partie-plateau de la pièce-mandrin, l'organe porte-burin 27 porte un levier suiveur 30 qui sert à définir exactement la position de la pointe du burin 32.

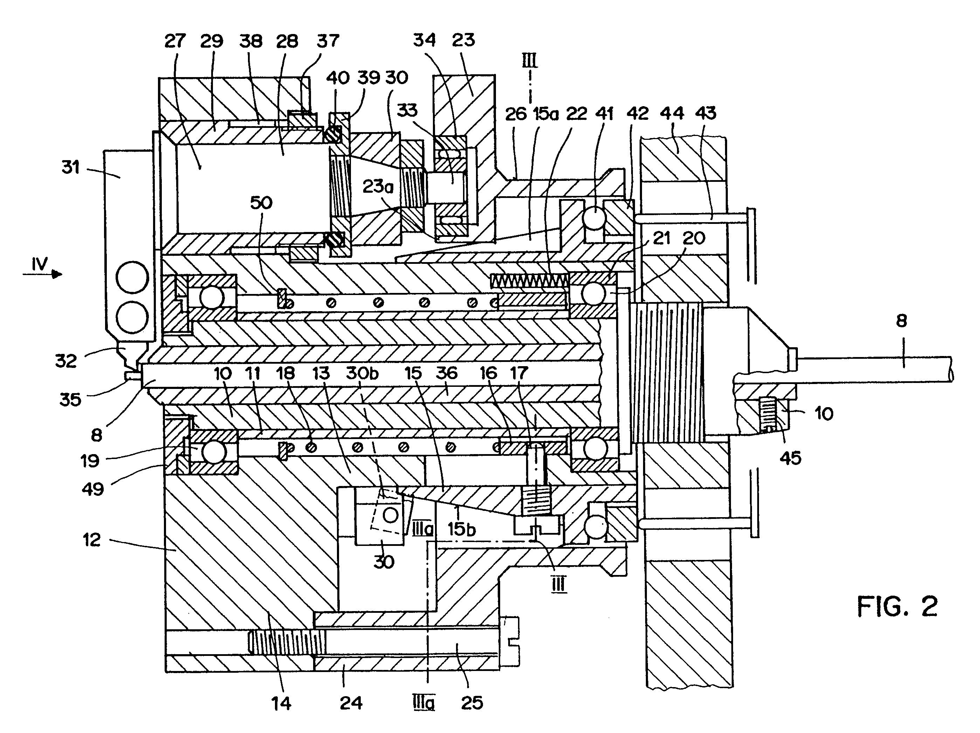

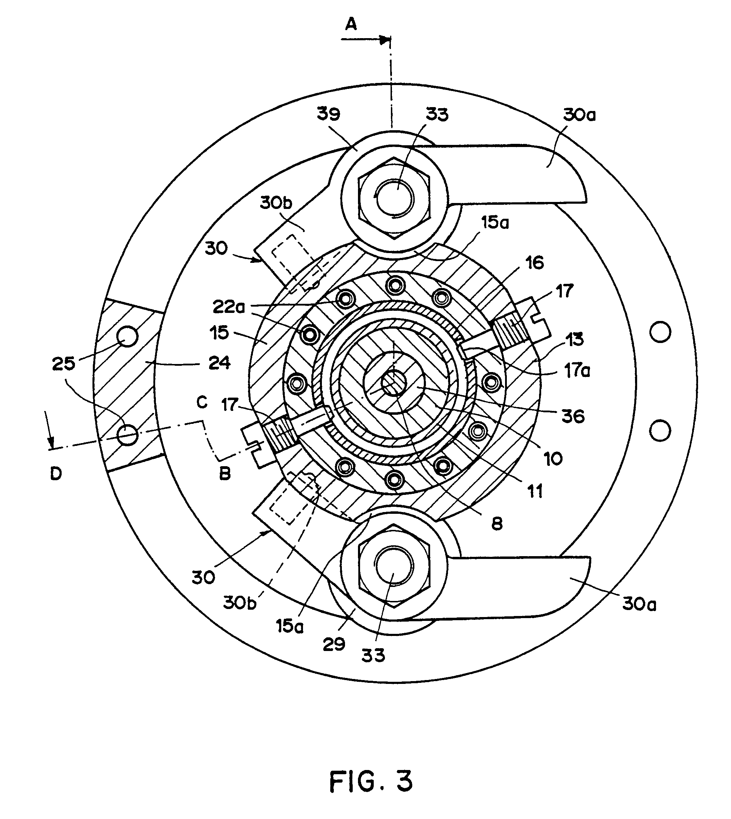

Une pièce-douille conique 15 est engagée sur la partie-manchon 13 de la pièce-mandrin 12, tournant avec elle mais pouvant se déplacer axialement par rapport à elle. Le bec 30b du levier suiveur 30 vient en appui contre la surface conique 15b de la pièce-douille conique 15, comme cela est visible aux fig. 2 et 3. Chaque levier suiveur 30 comporte par ailleurs un contre-poids 30a qui a pour fonction de l'équilibrer et d'assurer aussi l'appui du bec 30b contre la surface conique 15b, du fait que la force centrifuge s'exerçant sur le contre-poids 30a est plus grande que celle qui s'exerce contre la partie portant le bec 30b, de sorte que c'est la force centrifuge elle-même qui assure l'appui du bec 30b contre la douille conique. Une cage de billes à appui radial 41 est placée contre la face arrière de la douille conique 15 et une bague fixe 42, commandée par des tétons d'appui depuis l'agencement de commande du poste de décolletage, permet de positionner exactement la pièce-douille 15 axialement sur la partie-manchon 13 de la pièce-mandrin 12, contre l'action de moyens ressorts.

Les éléments précédemment décrits sont d'un type connu et il n'est pas nécessaire de les considérer davantage ici.

Les moyens ressorts repoussant la douille conique dans les mandrins de l'art antérieur étaient des ressorts hélicoïdaux disposés excentriquement entre la partie-plateau 14 de la pièce-mandrin 12 et une collerette arrière de la douille conique 15. Cette disposition s'avérait peu résistante à l'égard des forces centrifuges et des vibrations intervenant à vitesse de rotation élevée. Les moyens ressorts dans le mandrin proposé par l'invention consistent en un ressort central 18 logé à l'intérieur de la pièce-mandrin, entre les roulements à billes. Ce ressort 18 est en appui vers l'avant contre un circlips 50 logé de façon classique dans une gorge de l'alésage intérieur de la pièce-mandrin. Du côté arrière, le ressort 18 s'appuie contre une bague d'appui 16 qui communique avec la pièce-douille 15 par l'intermédiaire d'une vis 17. Cette vis 17 traverse une fente axiale pratiquée dans la pièce-douille conique à laquelle elle transmet la pression vers l'arrière exercée par le ressort 18. A la fig. 3, on voit que les vis 17 sont au nombre de deux, diamétralement opposées, de même que les organes porte-burins sont au nombre de deux. Il n'est pas exclu toutefois de prévoir une construction comprenant un plus grand nombre d'organes porte-burins et/ou un plus grand nombre de vis de liaison. On note que le ressort 18 ainsi monté est à l'abri de toute action néfaste provenant de la force centrifuge, même à haute vitesse de rotation. Cette sécurité est assurée premièrement par le fait que le ressort 18 est coaxial au tasseau et que les forces centrifuges ne sauraient le déplacer (au maximum pourraient-elles tendre à le "gonfler"). Deuxièmement, cette sécurité est assurée par l'appui du ressort 18 contre la surface intérieure du mandrin. Cette construction et cette disposition-là des moyens-ressorts ont donné toute satisfaction lors des essais à haute vitesse.

Un autre effet négatif qui, dans les mandrins de l'art antérieur, tendait à raccourcir notablement la durée de vie d'un mandrin était l'effet de l'usure des roulements à billes (du type moyeu de roue de vélo dans l'art antérieur). Il est impossible d'empêcher que les billes et les sièges de billes des roulements à billes s'usent à longue échéance. Un très léger jeu dû à l'usure peut, si des mesures ne sont pas prises contre ce phénomène, favoriser les vibrations et les balourds dans le mandrin tournant à vitesse élevée, vibrations et balourds qui, à leur tour, augmentent l'usure, en un phénomène qui devient vite dégénératif. Le mandrin selon la présente invention comprend un agencement des roulements à billes qui tend à neutraliser ou éliminer les effets de l'usure, dès leur naissance. Le roulement à billes avant 19 est monté avec châssage serré, d'une manière classique entre le tasseau et la pièce-mandrin, le maintien de ce roulement étant assuré par un écrou 49 qui presse l'anneau-siège intérieur du roulement à billes 19 alors qu'une garniture de propreté 49a évite toute entrée de poussière ou déchets dans le roulement à billes 19. Une douille intermédiaire 11 assure l'espacement axial entre les anneaux-sièges intérieurs des deux roulements 19 et 20. Le roulement à billes arrière 20 est, lors du montage, d'abord chassé par son anneau-siège intérieur autour de la surface extérieure du tasseau, jusqu'à l'arrière de celui-ci, contre une collerette 15c. Lors de l'engagement de la partie-manchon 13 de la pièce mandrin 12 autour du roulement à billes arrière 20, on dispose les tolérances de montage de façon que l'anneau-siège extérieur du roulement 20 soit engagé à serrage léger ou soit engagé gras dans la surface intérieure de la partie-manchon 13 qui le reçoit. Ce chassage léger, au lieu d'un chassage serré, se situe à l'endroit désigné par 21 à la fig. 2.

Dix perçages radiaux sont ménagés dans la surface d'épaulement arrière de la partie-manchon de la pièce-mandrin, comme on le voit en 22, 22a aux fig. 2 et 3. Des ressorts hélicoïdaux 22a sont logés dans ces perçages borgnes 22 et, étant d'une longueur d'approximativement 10 à 12 mm, ils émergent hors des trous borgnes 22 d'une distance d'approximativement 1,5 mm. Lors de la mise en place de la pièce-mandrin sur le roulement à billes arrière 20, ces ressorts 22a sont comprimés de façon que l'anneau-siège extérieur du roulement 20 vienne en appui axial contre l'épaulement de la partie-manchon 13. Les quelques dizaines (ou éventuellement davantage) de kilos de pression dûs aux dix ressorts 22a ne sauraient guère repousser l'anneau-siège extérieur du roulement 22 à l'intérieur de l'alésage de la pièce-mandrin lorsque la machine est immobile. Par contre, en fonctionnement, les vibrations ou trépidations sont suffisantes pour que, compte tenu du serrage moins fort qui existe en cet endroit, les ressorts 22a repoussent légèrement l'anneau-siège lorsqu'une certaine usure, principalement des billes, tend à créer un jeu dans ce roulement. De façon connue, les deux roulements 19 et 20 sont du type fournissant un appui axial en plus de l'appui radial et ils sont soumis, par le dimensionnement des composants, à une contrainte axiale qui supprime tout jeu au départ. Ensuite, en fonctionnement, ce sont les ressorts 22a qui maintiennent cette contrainte axiale malgré l'usure, de sorte que le phénomène d'usure ne devient pas dégénératif. La présence de ces ressorts 22a de rattrapage axial de l'usure n'est malgré tout pas gênante quant à la rigidité de l'effet de palier, rigidité qui, dans de tels mandrins, est soumise à de hautes exigences, vu la précision extrême de l'usinage effectuée sur ces machines (centième, voire millième de millimètre) et vu la masse rotative relativement importante qui tourne en quelque sorte en porte-à-faux sur le tasseau.

Le mandrin 9 comprend également une pièce-poulie 23 qui est fixée à la pièce-mandrin par des vis 25 traversant des pieds de fixation périphériques 24. La pièce-poulie 23 aurait en quelque sorte la forme d'une pièce-cloche dont la jupe aurait été en grande partie enlevée pour ne laisser subsister que les pieds de fixation 24. La pièce-poulie présente par ailleurs une surface 26 sur laquelle agit une courroie d'entraînement, de façon connue.

La pièce-poulie 23 entoure la plus grande partie de la pièce-douille conique 15. Cette pièce-poulie 23 comprend, aux deux endroits diamétralement opposés où se situent les organes porte-burins 27, des bossages intérieurs 23a qui permettent la mise en place de roulements à rouleaux 34 qui viennent guider des pivots d'extrémité 33 coaxiaux aux pivots 29 des organes porte-burins. Pour le passage de ces bossages 32a, la pièce-douille conique 15 présente aux endroits correspondants deux échancrures 15a. la fig. 2 permet bien de comprendre comment la pièce-douille conique 15 se déplace axialement autour de la partie-manchon 13 de la pièce-mandrin 12.

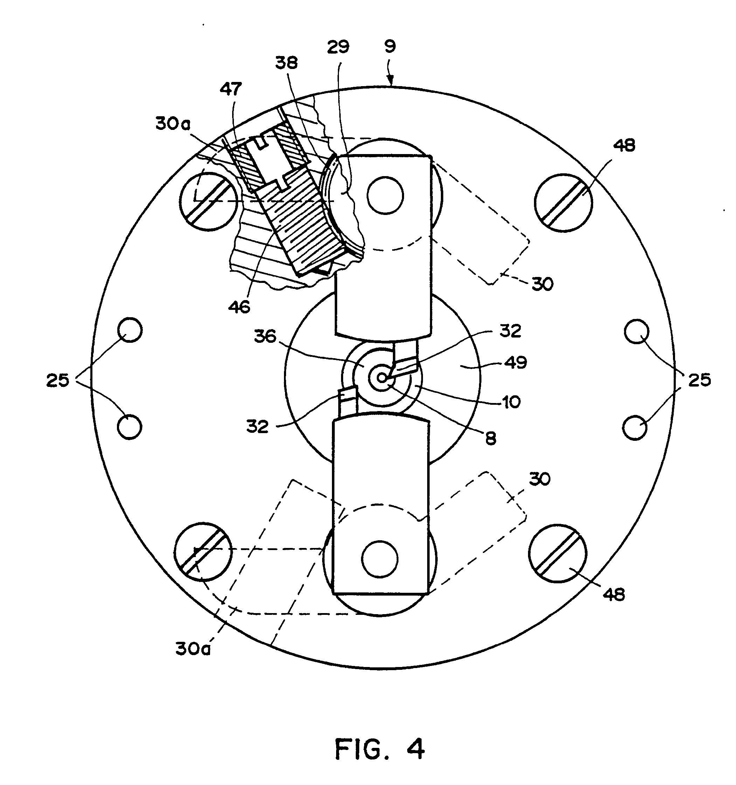

Les extrémités de burin 32 effectuent des opérations de décolletage très précises autour de la barre de matériau 8, dans laquelle elles peuvent par exemple travailler un téton d'extrémité 35 de très petites dimensions. On note que, comme cela ressort de la construction visible aux fig. 3 et 4, les deux burins 32 agissent à des instants différents, puisque les pivotements des organes porte-burins sont de sens opposé. Lorsqu'un des burins est à l'intérieur de la section de la barre de matériau à usiner, l'autre se trouve à l'extérieur, et vice et versa. Par contre, la position axiale des pointes de burin est très importante à définir exactement par rapport à l'extrémité conique du canon 36, dont la pointe de burin n'est éloignée que de quelques centièmes de millimètre. Le positionnement axial des organes porte-mandrins 27 est donc extrêmement important, ce positionnement s'établit en dépendance exacte du positionnement axial du canon 29 correspondant, étant donné qu'un écrou de serrage 39, muni d'un organe de maintien élastique 40, serre la partie-pivot 28 de l'organe porte-burins axialement dans le canon 29. Par ailleurs, ce canon 29 est muni d'un filetage fin 29a qui est en engagement sans jeu avec un filetage intérieur d'une bague de positionnement axial 37 fixée dans la partie-plateau 14 de la pièce-mandrin 12. L'obtention de cet engagement exact et sans jeu est connue des mandrins de l'art antérieur. Pour déplacer axialement l'organe porte-burins, il convient donc de faire tourner le manchon 29 sur son axe d'un certain arc. Pour réaliser ceci d'une façon très précise, on utilise une commande à vis sans fin par laquelle une vis sans fin 46 agit sur une denture adéquate 38 ménagée dans la surface périphérique du canon 29. La fig. 4 montre cet engagement. La vis sans fin 46 est axialement retenue au fond d'un perçage borgne radial, le maintien en place de cette vis sans fin 46 étant de préférence assuré par une vis couronne de blocage 47. Pour faire tourner le manchon 29, il faut donc desserrer quelque peu la vis 47, puis faire tourner la vis sans fin 46 de la quantité voulue, puis resserrer la vis de serrage 47. On arrive à un ordre de précision très élevé, un arc notable de rotation de la vis sans fin 46 provoquant un déplacement axial du burin d'approximativement 1/100 mm.

Dans les mandrins de l'art antérieur, les vis sans fin de positionnement des canons sont placées de façon tangentielle, ce qui oblige d'avoir une importante surépaisseur de matière au-delà du diamètre des canons 27. La disposition radiale de la vis sans fin 46 permet ainsi une économie importante de matière à la périphérie du mandrin, ce qui constitue une mesure importante pour les performances à vitesse de rotation élevée.

On note encore à la fig. 4 la présence de vis d'équilibrage 48 dont le placement a également été modifié par rapport aux mandrins connus, en particulier pour permettre la disposition radiale des vis sans fin 46. Les vis d'équilibrage 48 sont toujours bloquées en place, la variation de masse aux quatre endroits périphériques en question étant réalisée par un évidement que l'on pratique à l'intérieur des vis d'équilibrage (ou en ayant recours à un assortiment de vis d'équilibrage ayant le même filet, mais présentant des masses différentes). On note que le mandrin proposé comprend aussi tout un dispositif de huilage, par huile liquide ou par brouillard d'huile, de même que différentes autres particularités technologiques qui se trouvaient déjà dans les mandrins de l'art antérieur et que l'on n'a donc pas représentés et décrits ici.

On note que, sur le mandrin proposé, un des deux burins 32 peut être remplacé par une molette, ce mandrin pouvant fort bien contribuer à la fabrication de pièces décolletées comprenant un molletage (ou une cannelure).

Des tests ont été effectués sur des prototypes du mandrin proposé : ces tests ont permis de constater qu'à une vitesse de rotation de 12'000 t/m (double de la vitesse nominale des mandrins connus), la durée de vie, entre deux révisions nécessaires, était plus longue que celle qu'on avait antérieurement.

On remarque encore que la construction proposée, avec les roulements à billes agencés comme indiqué et avec le ressort de rappel coaxial proposé, simplifie le montage et le démontage du mandrin.

On note que, lors, par exemple, d'un remplacement de la pièce-douille conique 15, l'enlèvement complet des deux vis 17 ne modifie pas notablement la position axiale de la bague d'appui 16. En effet, la dimension de celle-ci est établie de façon qu'il subsiste moins d'un millimètre entre elle et le roulement à billes arrière 20, de sorte que, lors de l'enlèvement des deux vis 17 — le mandrin étant bien sûr arrêté — le ressort 18 ne fait reculer la bague d'appui 16 que de moins d'un millimètre, sur quoi cette bague s'appuie contre le roulement à billes. Lors de la remise en place de la pièce-douille conique 15, les vis 17 trouvent facilement le perçage dans la bague d'appui 16, même si celle-ci s'est déplacée, du fait d'un biseau adéquat à l'extrémité des vis 17. On voit du reste que les vis 17 sont bloquées par filetage dans la pièce-douille conique 15 tandis que leur extrémité s'engage de façon lisse dans le perçage de la bague d'appui 16.

La description d'un exemple d'exécution de l'objet de l'invention qui vient d'être donnée à l'aide du texte et du dessin montre bien que l'objet de cette invention atteint les performances visées, à savoir principalement la possibilité de tourner à vitesse élevée (12'000 t/m) tout en conservant, voire améliorant, la durée de vis, de même que la simplification des opérations de montage et démontage.

## Revendications

1. Mandrin rotatif pour poste de décolletage à outils rotatifs tournant autour de la pièce à usiner, comprenant :
— un tasseau tubulaire fixe (10, 36) axialement traversé par la tige de matériau à usiner (8) et permettant son guidage,
— une pièce-mandrin (12) rotativement montée sur le tasseau (10) par l'intermédiaire de moyens à billes (19, 20),
— une pièce-poulie (23) fixée à la pièce-mandrin (12) et apte (26) à recevoir une courroie ou autre moyen équivalent d'entraînement rotatif du mandrin,
— au moins un organe porte-burins (27, 28) destiné à tenir un burin d'usinage (31, 32) ou outil similaire, cet organe, muni d'un levier suiveur (30), étant monté dans la pièce-mandrin (12) et pouvant y subir un mouvement qui déplace radialement une partie active (32) du burin ou autre outil,
— une pièce-douille (15) rotativement solidaire de la pièce-mandrin (12), mais axialement coulissante sur celle-ci, cette pièce-douille (15) étant agencée avec une portée conique (15b) pour commander, par action sur le levier-suiveur (30) de chaque dit organe (27, 28), la position radiale des portions actives de burins (32) ou autres outils en fonction de la position axiale de ladite pièce-douille (15),
— et des moyens à ressort (18) repoussant axialement la pièce-douille (15), de façon que la position axiale de celle-ci puisse être commandée avec précision par des moyens de positionnement axial (43) agissant sur la pièce-douille (15) par l'intermédiaire d'un roulement à appui axial (41, 42), caractérisé en ce qu'il comprend un agencement anti-dégénératif à l'égard de balourds de la pièce-mandrin (12) que des vitesses de rotation élevées de celle-ci pourraient sinon faire dégénérer, cet agencement anti-dégénératif étant concrétisé par le fait que lesdits moyens à ressorts sont formés d'un ressort hélicoïdal central (18) logé dans un espace cylindrique existant entre le tasseau (10) et la pièce-mandrin (12), ce ressort (18) tournant sur son axe avec la pièce-mandrin (12), dont l'axe coïncide avec celui du ressort (18), de façon que le ressort (18) se trouve guidé et retenu par la pièce-mandrin (12), une bague d'appui cylindrique (16) étant logée dans le même dit espace cylindrique et étant repoussée par le ressort (18), et des moyens de liaison (17) étant établis entre cette bague d'appui (16) et ladite pièce-douille (15), ces moyens (17) passant par des fentes longitudinales ménagées dans une partie (13) de la pièce-mandrin (12) substantiellement en forme de manchon et autour de laquelle est montée ladite pièce-douille (15).

2. Mandrin rotatif selon la revendication 1, caractérisé en ce que ledit agencement anti-dégénératif est concrétisé par le fait que lesdits moyens à billes comprennent deux roulements à billes préfabriqués (19, 20) du type à appui oblique, c'est-à-dire du type ayant un anneau-siège intérieur à surface cylindrique extérieure de montage et un anneau-siège extérieur à portée cylindrique extérieure de montage avec, entre les sièges des anneaux, des billes assurant un appui axial en plus de l'appui radial, lesdites surfaces cylindriques intérieures des roulements (19, 20) étant montées sur des portées respectives dudit tasseau (10) et lesdites portées extérieures des roulements (19, 20) étant montées dans des surfaces cylindriques intérieures respectives de ladite pièce-mandrin (12), les deux roulements (19, 20) étant montés en opposition de façon qu'une contrainte axiale entre eux puisse éliminer tout jeu de leurs billes, un (21) des quatre anneaux-sièges étant monté à serrage léger ou monté gras, tandis que les autres sont montés à serrage fort, des éléments élastiques (22a) étant placés dans des logements adéquats (22) de la pièce-mandrin (12) ou du tasseau (10) pour exercer un appui dans le sens axial contre une face latérale de l'anneau-siège (21) monté à serrage léger ou monté gras, de façon à contraindre axialement les roulements (19, 20) pour rattraper toute usure qui tendrait à provoquer un jeu.

3. Mandrin rotatif selon la revendication 2, caractérisé en ce que ledit anneau-siège monté à serrage léger, ou monté gras, est l'anneau-siège extérieur (21) du roulement arrière (20), c'est-à-dire du roulement situé le plus loin des parties actives du burin (31, 32), lesdits éléments élastiques (22a) étant des ressorts hélicoïdaux logés dans des perçages (22) débouchant dans une surface d'épaulement de la pièce-mandrain (12), formant arrêt latéral pour l'anneau-siège (21).

4. Mandrin rotatif selon l'une des revendications 1 à 3, dans lequel ladite pièce-mandrin (12) comprend une partie substantiellement en forme de manchon (13) montée rotativement sur ledit tasseau (10) et portant ladite pièce-douille (15) et, se dressant à une extrémité de cette partie en forme de manchon (13) en un seul corps avec elle, une partie substantiellement en forme de plateau (14) avec une face frontale devant laquelle les organes porte-burins (27, 28) au nombre de deux parviennent pour tenir et mouvoir les burins (31, 32) et une face arrière derrière laquelle lesdits leviers-suiveurs (30) se situent au droit de la partie en forme de manchon (13) et de la pièce-douille (15), un pivot (28) présenté par chaque dit organe (27, 28) traversant la partie en forme de plateau (14) de la pièce-mandrin (12), tandis que ladite Pièce-poulie (23) est fixée contre ladite face arrière comme une coiffe autour de ladite pièce-douille (15), caractérisé en ce que ladite pièce-poulie (23) comprend deux échancrures diamétralement opposées, destinées à laisser place de passage à des contrepoids d'équilibrage (30a) des leviers-suiveurs (30), ces échancrures étant élargies au maximum de façon à diminuer la masse périphérique du mandrin, des portions (24) de pièce-poulie ne subsistant que sur deux arcs, diamétralement opposés, ne dépassant pas l'ordre de 30°, pour assurer la fixation de la pièce-poulie (23) contre la face arrière de la pièce-mandrin (12).

5. Mandrin rotatif selon la revendication 3, dans lequel lesdits pivots (28) des organes porte-burins (27, 28) sont ajustés axialement au moyen de canons (29) positionnés dans ladite partie en forme de plateau (14) de la pièce-mandrin (12), à l'aide d'un dispositif qui ajuste la position axiale exacte du canon (29) en réponse à une rotation de celui-ci, cette rotation étant elle-même commandée par une vis sans fin (46) agissant sur une denture (38) du canon (29), caractérisé en ce que ladite vis sans fin (46) d'ajustage du canon (29) est disposée, à côté de celui-ci, dans une direction substantiellement radiale, de façon à n'exiger, pour la partie-plateau (14), aucun surcroît de diamètre au-delà de celui nécessaire à sa tenue desdits canons (29).

**Patentansprüche**

1. Drehendes Futter für eine Abstechstation mit um die Achse des zu bearbeitenden Werkstückes rotierenden Werkzeugen, wobei vorhanden ist :
— eine feste Traghülse (10, 36), die axial von der Stange des zu bearbeitenden Materiales (8) durchdrungen wird und diese führt,
— ein unter Zwischenschaltung von Kugelmitteln (19), (20) rotierbar auf die Traghülse (10) aufgesetzter Futterkörper (12),

— ein mit dem Futterkörper (12) verbundener Riemenscheibenkörper (23) zum Aufnehmen eines Riemens oder eines äquivalenten anderen Mittels zum Antreiben der Rotation des Futters,

— wenigstens ein Meisselhalter (27, 28), zum Halten eines Bearbeitungsmeissels (31, 32) oder eines ähnlichen Werkzeuges, wobei dieser Meisselhalter mit einem Schlepphebel (30) verbunden ist, der sich innerhalb des Futterkörpers (12) befindet und eine Bewegung erfährt, die den aktiven Teil des Meissels (32) oder anderen Werkzeuges radial verschiebt,

— ein rotierender Hülsenkörper (15), der fest mit dem Futterkörper (12) verbunden ist, aber auf diesem axial verschiebbar ist, welcher Hülsenkörper (15) mit einem konischen Sitz (15b) versehen ist, um über die Wirkung des Schlepphebels (30) jedes Meisselhalters (27, 28) die radiale Position der aktiven Teile der Meissel (32) oder anderen Werkzeuge in Abhängigkeit der axialen Position des erwähnten rotierenden Hülsenkörpers (15) zu steuern,

— Federmittel (18), welche axial derart gegen den Hülsenkörper (15) drücken, dass dessen axiale Position mit hoher Präzision durch axiale Positioniermittel (43), die unter Zwischenschaltung von Axiallagern (41, 42) auf den Hülsenkörper (15) wirken, gesteuert werden kann, dadurch gekennzeichnet, dass eine im Hinblick auf die Unwuchten des Futterkörpers (12) auswirkungsarme Betätigungsvorrichtung vorhanden ist, da hohe Drehzahlen des Futters ansonsten dessen Unwucht verschlechtern würden, wobei diese auswirkungsarme Betätigungsvorrichtung dadurch konkretisiert ist, dass die erwähnten Federmittel durch eine zentrale Schraubenfeder (18) gebildet werden, die sich in einem zwischen der Traghülse (10) und dem Futterkörper (12) vorhandenen zylindrischen Raum befindet, wobei sich die Feder (18) deren Achse mit derjenigen des Futterkörpers zusammenfällt, zusammen mit dem Futter um ihre Achse dreht, so dass die Feder (18) durch den Futterkörper (12) geführt und gehalten wird, dass in dem selben zylindrischen Raum eine zylindrische Stützhülse (16) vorhanden ist und von der Feder (18) gedrückt wird, und dass Verbindungsmittel (17) zwischen dieser Stützhülse (16) und dem erwähnten Hülsenkörper (15) vorhanden sind, welche Mittel (17) durch Langlöcher reichen, die in einem Bereich (13) des Futterkörpers (12) vorhanden sind, der im wesentlichen die Form einer Muffe besitzt und um welchen herum der Hülsenkörper (15) angeordnet ist.

2. Rotierendes Futter nach Anspruch 1, dadurch gekennzeichnet, dass die besagte auswirkungsarme Betätigungsvorrichtung dadurch konkretisiert ist, dass die erwähnten Kugelmittel zwei vorgefertigte Schrägkugellager (19, 20) aufweisen, d.h. von derjenigen Bauart sind, wo ein Innenring vorhanden ist mit zylindrischer Aussenfläche und ein Aussenring mit zylindrischem Aussensitz mit Kugeln zwischen den Sitzringen, welche Kugeln eine axiale und zusätzlich eine radiale Stützung ermöglichen, welche erwähnten zylindrischen Innenflächen der Lager (19, 20) auf entsprechenden Sitzen der erwähnten Traghülse (10) montiert sind und welche erwähnten Aussensitze der Lager (19, 20) jeweils in zylindrischen Innenflächen des erwähnten Futterkörpers (12) montiert sind, wobei die beiden Lager (19, 20) derart einander gegenüberliegend montiert sind, dass eine axiale Belastung zwischen ihnen das gesamte Spiel ihrer Kugeln beseitigen kann, wobei einer (21) der vier Sitzringe in losem Sitz oder Schiebesitz montiert ist, während die anderen mit einem festen Sitz montiert sind, und wobei elastische Elemente (22a) in entsprechenden Orten (22) des Futterkörpers (12) oder der Traghülse (10) angeordnet sind, um eine Stützung in axialer Richtung zwischen einer Seitenfläche des in lockerem Sitz oder Schiebesitz angebrachten Sitzringes (21) derart zu bewirken, dass die Lager (19, 20) axial belastet werden, um jeglichen Verschleiss zu kompensieren, welcher ein Spiel bewirken könnte.

3. Rotierendes Futter nach Anspruch 2, dadurch gekennzeichnet, dass der in lockerem Sitz oder Schiebesitz angebrachte Sitzring der Aussenring (21) des hinteren Lagers ist, d.h. desjenigen Lagers, welches am weitesten entfernt gelegen ist von den aktiven Bereichen des Meissels (31, 32), und dass die besagten elastischen Elemente (22a) Schraubenfedern sind, die in Bohrungen (22) untergebracht, welche in eine Schulterfläche des Futters münden und den Queranschlag für den Sitzring (21) bilden.

4. Rotierendes Futter nach einem der Ansprüche 1 bis 3, wobei der Futterkörper (12) einen im wesentlichen hülsenförmigen Bereich (13) aufweist, welcher drehbar über der erwähnten Traghülse (10) angebracht ist und den besagten Hülsenkörper (15) trägt, und wobei ein im wesentlichen plattenförmiger Teil (14) vorhanden ist, dem sich an seinem einen Ende der hülsenförmige Bereich (13) einteilig anschliesst, wobei der plattenförmige Bereich (14) eine Frontseite besitzt, vor welcher die Meisselhalter (27, 28) zum Halten und Bewegen der Meissel (31, 32) der Anzahl zwei erscheinen, und wobei eine hintere Fläche vorhanden ist, hinter welcher sich die Schlepphebel (30) bündig zu dem hülsenförmigen Bereich (13) und dem Hülsenkörper (15) befinden, wobei jeweils ein zu jedem der erwähnten Meisselhalter (27, 28) zugehöriger Schwenkzapfen (28) den plattenförmigen Bereich (14) des Futters (12) durchquert, während die erwähnte Riemenscheibe (23) an der rückwärtigen Fläche wie eine Kappe um den Hülsenkörper (15) befestigt ist, dadurch gekennzeichnet, dass die Riemenscheibe (23) zwei diametral gegenüberliegende Ausschnitte aufweist, die dazu bestimmt sind, Platz zu lassen für den Durchtritt von Ausgleichsgewichten (30a) der Schlepphebel (30), wobei diese Aussparungen bis zu einem Maximum derart vergrössert sind, dass die Masse an der Peripherie des Futters verringert wird, wobei die Bereiche (24) der Riemenscheibe sich lediglich über zwei Bögen erstrecken, die sich diametral gegenüberliegen und nicht die Grössenordnung von 30° überschreiten, um die Befestigung der Riemenscheibe gegen die rückwärtige Fläche des Futterkörpers (12) sicherzustellen.

5. Rotierendes Futter nach Anspruch 3, wobei die erwähnten Schwenkzapfen (28) der Meisselhalter (27, 28) axial mittels Hülsen (29) justiert sind, die in dem plattenförmigen Abschnitt (14) des Futterkörpers (12) vorgesehen sind, wobei diese Justierung mit Hilfe einer Vorrichtung geschieht, die die axiale Position der Hülse (29) exakt in Abhängigkeit einer Rotation derselben einstellt, wobei die Rotation selbst durch eine auf eine Verzahnung (38) der Hülse (29) wirkende Schnecke (46) vorgenommen wird, dadurch gekennzeichnet, dass die Einstellschnecke (46) der Hülse (29) an deren Seite in einer im wesentlichen radialen Richtung derart vorgesehen ist, dass für den plattenförmigen Bereich keinerlei Durchmesservergrösserung über das zum Halten der Hülsen (29) erforderliche Mass hinaus erforderlich ist.

## Claims

1. A rotating chuck for a cutting station with rotating tools turning around the workpiece to be machined, comprising :
   — a fixed tubular support (10, 36), axially traversed by the stock to be machined (8) and enabling guidance thereof,
   — a chuck (12) mounted rotatingly on the support (10) by spherical means (19, 20),
   — a driving wheel (23) connected to the chuck (12) and suitable (26) for receiving a drive belt or other equivalent means for rotating the chuck,
   — at least one cutter support element (27, 28) intended to hold a machine cutter (31, 32) or similar tool, this element, provided with an adjusting lever (30), being mounted in the chuck (12) and being there able to support a movement which radially displaces an active part (32) of the cutter or other tool,
   — a sleeve (15) rotatingly integral with the chuck (12), but sliding axially on the latter, this sleeve (15) being arranged with an arcuate surface (15b) to control, by acting on the adjusting lever (30) of each said element (27, 28), the radial position of the active parts of cutters (32) or other tools according to the axial position of the said sleeve (15),
   — and spring means (18) axially pushing back the sleeve (15) such that the axial position of the latter may be accurately controlled by axial positioning means (43) acting on the sleeve (15) by way of an axial-support bearing (41, 42), characterized in that it comprises an anti-degeneration arrangement with regard to unbalanced masses of the chuck (12) which the high rotation speeds of the latter could otherwise degenerate, this anti-degeneration arrangement being realized by the fact that the said spring means are formed of a central helical spring (18) housed in a cylindrical space between the support (10) and the chuck (12), this spring (18) turning on its axis with the chuck (12), the axis of which coincides with that of the spring (18), in such a way that the spring (18) is guided and held by the chuck (12), a cylindrical support ring (16) being housed in the same said cylindrical space and being pushed back by the spring (18), and connecting means (17) being provided between this support ring (16) and the said sleeve (15), these means (17) passing through longitudinal apertures disposed in one part (13) of the chuck (12) substantially in the form of a tube and around which is mounted the said sleeve (15).

2. Rotating chuck according to claim 1, characterized in that the said anti-degeneration arrangement is realized by the fact that the said spherical means comprise two prefabricated ball bearings (19, 20), of the tapered kind, that is to say, of the kind having an inner race with a cylindrical surface outside the mounting and an outer race with a cylindrical surface outside the mounting with, between the races, balls ensuring an axial support additional to the radial support, the said inner cylindrical surfaces of the bearings (19, 20) being mounted on respective areas of the said support (10) and the said outer areas of the bearings (19, 20) being mounted in the respective inner cylindrical surfaces of the said chuck (12), the two bearings (19, 20) being oppositely mounted such that an axial stress between them can eliminate all play from their balls, one (21) of the four races being lightly or loosely mounted, whilst the others are firmly mounted, flexible elements (22a) being situated in suitable housings (22) in the chuck (12) or the support (10) to exert a support in the axial direction against a side face of the lightly or loosely mounted race (21), in such a way as to axially stress the bearings (19, 20) to take up any wear which might lead to play.

3. A rotating chuck according to claim 2, characterized in that the said lightly or loosely mounted race is the outer race (21) of the back bearing (20), i.e., of the bearing disposed the farthest away from the active parts of the cutter (31, 32), the said flexible elements (22a) being helical springs housed in borings (22) ending in a surface shouldering on the chuck (12), forming the lateral stop for the race (21).

4. A rotating chuck according to one of claims 1 to 3, in which the said chuck (12) comprises a part substantially in the form of a tube (13), mounted rotatingly on the said support (10) and carrying the said sleeve (15) and, rising at one end of this part in the form of a tube (13) in a single element with it, a part substantially in the form of a plate (14) with a front surface, in front of which come two of the cutter support elements (27, 28) to hold and move the cutters (31, 32) and a back surface behind which are found the said adjusting levers (30) to the right of the part in the form of a tube (13) and the chuck (15), each said element (27, 28) having a pivot (28) passing through the part in the form of a plate (14) of the chuck (12), whilst the said drive wheel (23) is fixed against the said back surface like a cover around the said sleeve (15), characterized in that the said drive wheel (23) comprises two diametrically opposed notches, intended to allow room for counterbalance weights (30a) of the adjusting levers (30) to pass, these notches being enlarged to the maximum in such a way as to diminish the pheripheral mass of the chuck, portions (24) of drive wheel existing only on two arcuates, diametrically opposed, not exceeding the order of 30°, to ensure that the drive wheel (23) is fixed against the back surface of the chuck (12).

5. A rotating chuck according to claim 3, in which the said pivots (28) of the cutter support elements (27, 28) are axially adjusted by means of spindles (29) disposed in the said part in the form of a plate (14) of the chuck (12), with the aid of a device which adjusts the exact axial position of the spindle (29) in response to a rotation of the latter, this rotation being itself controlled by an endless screw (46) acting on toothing (38) in the spindle (29), characterized in that the said endless screw (46) for adjusting the spindle (29) is disposed, adjacent to the latter, in a substantially radial direction, in such a way as not to require, for the plate part (14), any excess diameter beyond that necessary to hold the said spindles (29).

FIG. 1

FIG. 2

FIG. 3

FIG. 4

FIG. 5

EP 0 278 898 B1